# EUROPÄISCHE PATENTSCHRIFT

(11) **EP 2 781 787 B1**
(45) Veröffentlichungstag und Bekanntmachung des Hinweises auf die Patenterteilung: **05.06.2019**
(21) Anmeldenummer: 14000933.3
(22) Anmeldetag: 14.01.2014
(51) Int. Cl.: F16F 15/03, B60G 13/14, F16F 15/12, F16F 15/129, H02K 7/102

(54) **Rotationsdämpfer**
Rotary damper
Amortisseur rotatif

(30) Priorität: 22.03.2013 DE 102013004956
(43) Veröffentlichungstag der Anmeldung: 24.09.2014
(73) Patentinhaber: Audi AG, 85045 Ingolstadt (DE)
(72) Erfinder: Willems, Marco, DE - 85053 Ingolstadt (DE)

(56) Entgegenhaltungen:
- DE-A1-102009 018 889

## Beschreibung

Die Erfindung betrifft einen Rotationsdämpfer mit einem gehäusefesten Stator, einem Rotor und einem Getriebe, das einen Anlenkhebel mit dem Rotor des Getriebes des Rotationsdämpfers verbindet.

Die WO 2011/042085 A1 betrifft einen elektrischen Dämpfer zum Dämpfen der Relativbewegung zwischen einer ersten und einer zweiten Masse, umfassend einen durch die Massenbewegung angetriebenen Generator, der dadurch gekennzeichnet, dass der Generator in ein Getriebe integriert ist, wobei ein einen Stator bildendes erstes Getriebeelement durch die Massebewegung in Drehung versetzt wird, worüber ein einen Rotor bildendes zweites Getriebeelement, das mit dem ersten Getriebeelement direkt oder indirekt übersetzt gekoppelt ist, gedreht wird, wobei entweder am ersten oder am zweiten Getriebeelement Mittel zur Erzeugung eines Magnetfelds vorgesehen sind. Das Getriebe ist ein Planetengetriebe mit einem das erste Getriebeelement bildenden Hohlrad, mit diesem kämmenden Planetenrädern, und einem mit den Planetenrädern zusammen wirkenden Sonnenrad.

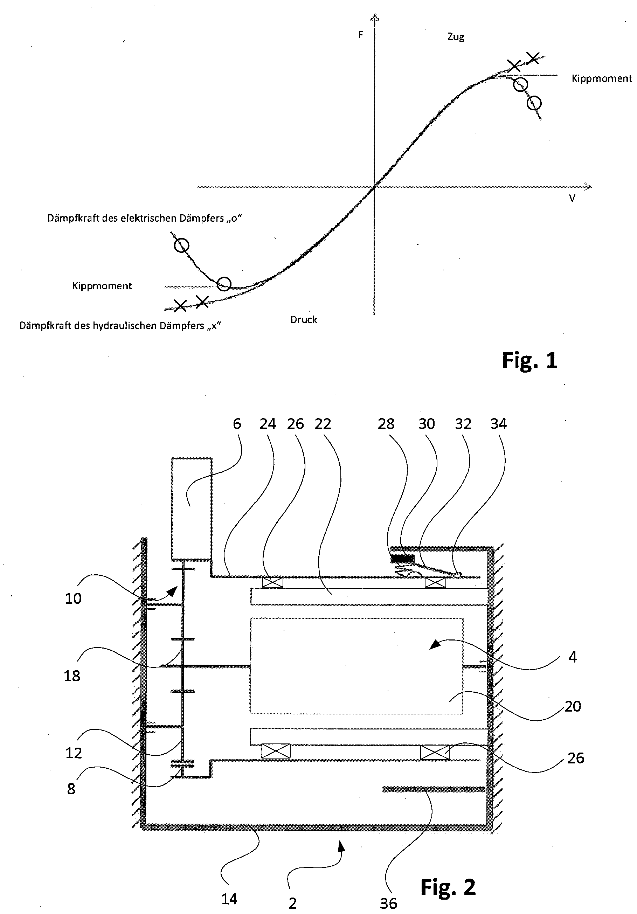

Fig. 1 zeigt beispielhaft den Verlauf der Dämpfkraft eines konventionellen hydraulischen Dämpfers, beispielsweise nach WO 2011/042085 A1, in Zug- und Druckrichtung. Das maximal von einem Generator im Generatorbetrieb darstellbare Drehmoment ist das Kippmoment. Dadurch wird gleichzeitig auch die maximal darstellbare Dämpfkraft begrenzt. Der Verlauf der Dämpfkraft eines elektrischen Dämpfers ist mit der Kurve x dargestellt. Sobald im Generator das Kippmoment überschritten wird, sinkt die Dämpfkraft deutlich ab. Der Generator muss daher derart ausgelegt werden, dass die im normalen Fahrbetrieb auftretenden Dämpfkräfte unterhalb des Generatorkippmoments liegen. Für Sonderereignisse (z.B. das Überfahren einer Schwelle mit hoher Fahrzeuggeschwindigkeit) muss die hohe Dämpfkraft eines hydraulischen Dämpfers allerdings auch mit einem elektrischen Dämpfer darstellbar sein. Ein Anheben des Kippmoments in der Generatorauslegung führt unweigerlich zu einem sehr großen und schweren Generator.

Die bei Sonderereignissen notwendigen maximalen Dämpfkräfte werden nur äußerst selten im Kundenbetrieb abgerufen. Eine Dimensionierung des Generators auf diese maximalen Kräfte ist daher wenig sinnvoll. Daher sind elektrische Dämpfer entwickelt worden, bei denen der Generator lediglich auf die im normalen Fahrbetrieb auftretenden Dämpfkräfte ausgelegt ist. Die für Sonderereignisse notwendigen hohen Dämpfkräfte werden durch zusätzliche Mittel erzeugt, die über Fliehkraft aktiviert werden und bei Dämpfergeschwindigkeiten unterhalb der Auslösegeschwindigkeit nicht im Eingriff sind.

So betrifft die DE 198 46 275 A1 ein System zur Wankstabilisierung von Fahrzeugen, insbesondere Kraftfahrzeugen, bei dem Stellmittel vorgesehen sind, die wenigstens einen Sensor zur Erfassung einer Wankgröße und mindestens einen Schwenkantrieb, der zwischen Hälften des vorderen und/oder hinteren Fahrwerkstabilisators angeordnet ist, aufweisen, die eine Vorspannung der Stabilisatorhälften zur Reduzierung oder Unterdrückung der Wankbewegung bewirken und die im Wankfall ein Gegenmoment auf den Fahrzeugaufbau abhängig von Ausgangssignalen des Sensors aufbringen. Der Schwenkantrieb ist ein elektromechanischer Schwenkantrieb und Mittel zur Blockierung der gegenseitigen Verschwenkung der Stabilisatorhälften sind vorgesehen. Die Blockierungsmittel weisen eine elektromagnetisch öffnende oder elektromagnetisch schließende Bremse auf, die bei jedem Schwenkantrieb zwischen einem jeweiligen Schwenkmotor und einem Untersetzungsgetriebe desselben angeordnet ist.

Die DE 10 2009 018 889 A1 betrifft einen Wankstabilisator eines Kraftfahrzeuges, mit einem zwischen zwei Stabilisatorabschnitten angeordneten Aktuator, dessen Rotor für eine Verdrehung der Stabilisatorabschnitte betätigbar ist, wobei eine auf den Rotor einwirkende Bremseinrichtung dadurch gekennzeichnet ist, dass diese als Fliehkraftbremse ausgebildet ist, die eine Reibleistung zwischen dem Rotor und einem Stator überträgt. Wenn der Rotor durch eine Motorwelle eines Elektromotors gebildet ist, sind radial verlagerbare Fliehkörper der Fliehkraftbremse mit der Motorwelle verbunden. Die Fliehkörper und der Stator sind als Reibpartner füreinander ausgebildet. Der Stator weist ein die Fliehkörper aufnehmendes Gehäuse auf. Die Fliehkörper sind entgegen einer Federkraft eines Federelementes radial auswärts verlagerbar.

In elektrischen Dämpfern nach dem Stand der Technik ist die Fliehkraftbremse, wenn sie überhaupt vorgesehen ist, in den Dämpfer selbst zwischen dem Rotor und dem Stator des Generators integriert, so dass die bei einem Ausnahmefall auftretenden Kräfte nach wie vor in den Rotor/Stator eingeleitet werden.

Dem gegenüber liegt der Erfindung die Aufgabe zugrunde, einen elektrischen Rotationsdämpfer bereitzustellen, bei dem im Ausnahmefall der Generator vollständig überbrückt wird.

Dazu ist der erfindungsgemäße elektrische Rotationsdämpfer dadurch gekennzeichnet, dass der Stator durch ein mit dem Getriebe verbundenes, mitdrehendes Gehäuseteil umschlossen ist, dass das Dämpfergehäuse einen das Gehäuseteil umgreifenden, mit dem Dämpfergehäuse drehfest verbundenen Gehäuseansatz aufweist, und dass zwischen dem mitdrehenden Gehäuseteil und dem Gehäuseansatz eine Fliehkraftbremse angeordnet ist.

Der Generator des elektrischen Dämpfers kann klein, leicht und effizient ausgelegt werden, ohne durch die selten auftretenden hohen Dämpfkräfte bei Sonderereignissen belastet zu werden. Des Weiteren werden bei einer Ausnahmesituation, das heißt, wenn die Dämpfungskraft das Kippmoment des elektrischen Dämpfers übersteigt, der Generator bestehend aus Stator und Rotor vollständig überbrückt wird, weil die Krafteinleitung zwischen dem aufbauseitigen Dämpfungsgehäuse und dem direkt mit dem Anlenkhebel verbundenen Gehäuseteil durch die Fliehkraftkupplung erfolgt.

Eine vorteilhafte Ausführung des erfindungsgemäßen elektrischen Rotationsdämpfers ist dadurch gekennzeichnet, dass das mitdrehende Gehäuseteil an dem Stator durch Drehlager drehbar gelagert ist. Da der Stator selbst direkt an dem Dämpfergehäuse drehfest montiert ist, ergibt sich dadurch eine stabile und vorteilhafte Lagerung des mitdrehenden Gehäuseteils auf den Stator.

Eine weitere vorteilhafte Ausführung des erfindungsgemäßen elektrischen Rotationsdämpfers ist dadurch gekennzeichnet, dass die Fliehkraftbremse eine mit dem Gehäuseteil verbundene Zugfeder und ein von der Zugfeder beaufschlagtes Reibelement mit einer Masse m umfasst, das infolge der Zentrifugalkraft in Richtung auf eine gehäusefeste Reibfläche an dem Gehäuseansatz bewegt wird, wobei in vorteilhafter Weise die Zugfeder und die Masse des Reibelements so dimensioniert sind, dass die Fliehkraftbremse wirksam wird, wenn eine geforderte Dämpfungskraft das von dem Generator zur Verfügung gestellte Kippmoment überschreitet. Auf diese vorteilhafte Weise kann die Aktion der Fliehkraftbremse auf den jeweiligen Anwendungsfall eingestellt werden.

Eine weitere vorteilhafte Ausführung des erfindungsgemäßen elektrischen Rotationsdämpfers ist dadurch gekennzeichnet, dass der Gehäuseansatz die Reibfläche der Fliehkraftbremse bildet, wodurch keine zusätzlichen Teile zur Bereitstellung der Reibfläche oder von einzelnen Reibflächen erforderlich sind.

Eine weitere vorteilhafte Ausführung des erfindungsgemäßen elektrischen Rotationsdämpfers ist dadurch gekennzeichnet, dass das Reibelement über ein Tragelement und ein Scharnier an dem Gehäuseteil befestigt ist. Damit ergibt sich in vorteilhafter Weise eine sichere und wenig bauaufwendige Anordnung der Fliehkraftbremse in dem elektrischen Dämpfer.

Weitere Vorteile, Merkmale und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen und in der Zeichnung werden die in der unten aufgeführten Liste der Bezugszeichen verwendeten Begriffe und zugeordneten Bezugszeichen verwendet. In den Zeichnungen bedeutet:
- Fig. 1: den Verlauf der Dämpfungskraft eines konventionellen hydraulischen Dämpfers und eines konventionellen elektrische Dämpfers in Zug- und Druckrichtung;
- Fig. 2: das Funktionsschema eines elektrischen Rotationsdämpfer nach einem Ausführungsbeispiel der Erfindung;
- Fig. 3: den Verlauf der Dämpfungskraft eines hydraulischen Dämpfers, eines elektrische Dämpfers und eines Reibelements in Zug- und Druckrichtung, und
- Fig. 4: eine schematische Darstellung einer Radaufhängung mit einem elektrischen Rotationsdämpfer nach Fig. 3.

In Fig. 2 ist das Funktionsschema eines elektrischen Rotationsdämpfers 2 mit einem elektrischen Generator 4 dargestellt. Ein Anlenkhebel 6 des Rotationsdämpfers 2 ist starr mit einem Hohlrad 8 eines Planetengetriebes 10 verbunden. Planetenräder 12 sind mit einem Dämpfergehäuse 14 verbunden, welches wiederum mit einem Fahrzeugaufbau 16 verbunden ist. Ein Sonnenrad 18 des Planetengetriebes 10 ist direkt mit einem Rotor 20 des elektrischen Generators 4 verbunden. Ein gehäusefester Stator 22 des elektrischen Generators 4 wird durch ein mit dem Hohlrad 8 verbundenes, mit dem Hohlrad 8 Gehäuseteil 24 umschlossen. Das mitdrehende Gehäuseteil 24 ist an dem Stator 22 durch Drehlager 26 drehbar gelagert

Auf dem mitdrehenden Gehäuseteil 24 ist über eine Zugfeder 28 ein Reibelement 30 mit einer Masse m angeordnet. Das Reibelement 30 ist über ein Tragelement 32 und ein Scharnier 34 schenkbar an dem Gehäuseteil 24 montiert. Dreht sich der Gehäuseteil 24 infolge der Anregung durch den Anlenkhebel 6 schnell genug, wird das Reibelement 30 gegen gehäusefesten Reibflächen an einem mit dem Dämpfergehäuse drehfest verbundenen Gehäuseansatz 36 gedrückt, und es entsteht die beschriebene Dämpfkraft aufgrund von Reibung. Der Gehäuseansatz 36 selbst bildet die Reibfläche der Fliehkraftbremse. Durch die Masse m des Reibelements 30 und die Federsteifigkeit der Zugfeder 28 kann die Auslösegeschwindigkeit, das heißt die Drehzahl, bei der das Reibelement 30 wirksam gegen die Reibfläche an dem Gehäuseansatz 36 gedrückt wird, eingestellt werden.

Die Zugfeder 28 und die Masse des Reibelements 30 werden demnach so dimensioniert, dass die Fliehkraftbremse wirksam wird, wenn eine geforderte Dämpfungskraft das von dem Generator 4 zur Verfügung gestellte Kippmoment überschritten wird.

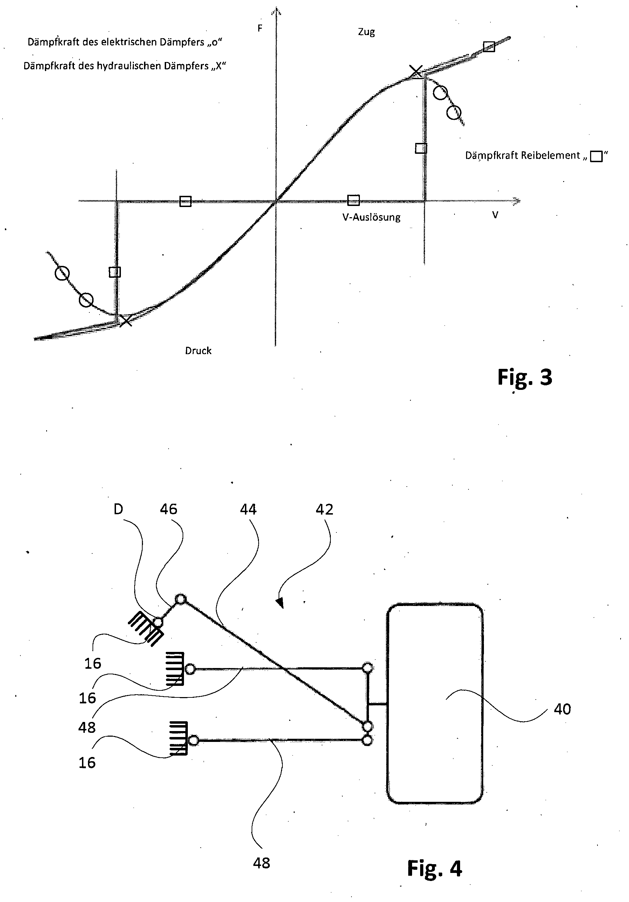

Fig. 3 den Verlauf der Dämpfungskraft eines hydraulischen Dämpfers, eines elektrische Dämpfers und eines Reibelements in Zug- und Druckrichtung. Der Verlauf der Dämpfungskraft durch das Reibelement 30 zeigt, dass die Fliehkraftbremse exakt an der Stelle des Kraftverlaufs stattfindet, an dem die Dämpfungskraft das von dem Generator 4 gelieferte Kippmoment überschritten wird, so dass auch bei Überschreitung des Kippmoments eine ausreichende Dämpfungskraft zur Verfügung steht.

Fig. 4 zeigt beispielhaft, wie der Rotationsdämpfer 2 in einer Achse mit Schubstangenanlenkung verbaut sein kann. Als Teil eines Kraftfahrzeugs ist ein Rad 40 mit einem Radträger 42 gezeigt, an dem eine Schiebestange 44 angeordnet ist, die mit einem Hebelelement 46 verbunden ist. Das Hebelelement 46 ist um eine Drehachse D schwenkbar gelagert, wobei sich der Dämpfer an der Stelle der Drehachse D befindet. Der Dämpfer 2 kann auch unmittelbar in der Drehaufhängung eines oder beider Querlenker 48 integriert sein. Wenn nun das Rad 40 ein- oder ausfedert, wird das Hebelelement 46 über die Schiebestange 44 bewegt, so dass es sich um die Drehachse D dreht, wodurch der Dämpfer 2 in Betrieb gesetzt wird und die umbeschriebene Dämpfungsfunktion erfüllen kann.

### Bezugszeichenliste

- 2: Rotationsdämpfer
- 4: Generator
- 6: Anlenkhebel
- 8: Hohlrad
- 10: Planetengetriebe
- 12: Planetenräder
- 14: Dämpfergehäuse
- 16: Fahrzeugaufbau
- 18: Sonnenrad
- 20: Rotor
- 22: Stator
- 24: Gehäuseteil
- 26: Drehlager
- 28: Zugfeder
- 30: Reibelement
- 32: Tragelement
- 34: Scharnier
- 36: Gehäuseansatz
- 40: Rad
- 42: Radträger
- 44: Schiebestange
- 46: Hebelelement
- 48: Querlenker

## Patentansprüche

1. Elektrischer Rotationsdämpfer (2) mit einem gehäusefesten Stator (22), einem Rotor (20) und einem Getriebe (10), das einen Anlenkhebel (6) mit dem Rotor (20) des Getriebes des Rotationsdämpfers (2) verbindet,
**dadurch gekennzeichnet, dass**
der Stator (22) durch ein mit dem Getriebe verbundenes, mitdrehendes Gehäuseteil (24) umschlossen ist, dass
ein Dämpfergehäuse (14) einen das mitdrehende Gehäuseteil (24) umgreifenden, mit dem Dämpfergehäuse (14) drehfest verbundenen Gehäuseansatz (36) aufweist, und dass zwischen dem mitdrehenden Gehäuseteil (24) und dem Gehäuseansatz (36) eine Fliehkraftbremse angeordnet ist.

2. Rotationsdämpfer (2) nach Anspruch 1, **dadurch gekennzeichnet, dass** das mitdrehende Gehäuseteil (24) an dem Stator (22) durch Drehlager (26) drehbar gelagert ist.

3. Rotationsdämpfer (2) nach Anspruch 1, **dadurch gekennzeichnet, dass** die Fliehkraftbremse eine mit dem mitdrehenden Gehäuseteil (24) verbundene Zugfeder (28) und ein von der Zugfeder (28) beaufschlagtes Reibelement mit einer Masse (m) umfasst, das infolge der Zentrifugalkraft in Richtung auf eine gehäusefeste Reibfläche an dem Gehäuseansatz (36) bewegt wird.

4. Rotationsdämpfer (2) nach Anspruch 1, **dadurch gekennzeichnet, dass** die Zugfeder (28) und die Masse des Reibelements so dimensioniert sind, dass die Fliehkraftbremse wirksam wird, wenn eine geforderte Dämpfungskraft das von dem Generator (4) zur Verfügung gestellte Kippmoment überschritten wird.

5. Rotationsdämpfer (2) nach Anspruch 1, **dadurch gekennzeichnet, dass** der Gehäuseansatz (36) die Reibfläche der Fliehkraftbremse bildet.

6. Rotationsdämpfer (2) nach Anspruch 1, **dadurch gekennzeichnet, dass** das Reibelement (30) über ein Tragelement (32) und ein Scharnier (34) an dem mitdrehenden Gehäuseteil (24) befestigt ist.

## Claims

1. Electric rotary damper (2) comprising a stator (22) fixed to the housing, a rotor (20) and a transmission (10) which connects an articulation lever (6) to the rotor (20) of the transmission of the rotary damper (2),
**characterised in that**
the stator (22) is enclosed by a co-rotating housing part (24) connected to the transmission, **in that**
a damper housing (14) has a housing attachment (36) which surrounds the co-rotating housing part (24) and is non-rotatably connected to the damper housing (14), and **in that**
a centrifugal brake is arranged between the co-rotating housing part (24) and the housing attachment (36).

2. Rotary damper (2) according to Claim 1, **characterised in that** the co-rotating housing part (24) is rotatably mounted on the stator (22) by means of pivot bearings (26).

3. Rotary damper (2) according to Claim 1, **characterised in that** the centrifugal brake comprises a tension spring (28) connected to the co-rotating housing part (24) and a friction element acted upon by the tension spring (28) and having a mass (m), said friction element being moved towards a friction surface fixed to the housing on the housing attachment (36) by means of the centrifugal force.

4. Rotary damper (2) according to Claim 1, **characterised in that** the tension spring (28) and the mass of the friction element are dimensioned so that the centrifugal brake is effective when a required damping force is exceeded the tilting moment made available by the generator (4).

5. Rotary damper (2) according to Claim 1, **characterised in that** the housing attachment (36) forms the friction surface of the centrifugal brake.

6. Rotary damper (2) according to Claim 1, **characterised in that** the friction element (30) is fixed on the co-rotating housing part (24) via a supporting element (32) and a hinge (34).

## Revendications

1. Amortisseur rotatif électrique (2) avec un stator (22) fixé au boîtier, un rotor (20) et un engrenage (10), qui relie un levier d'articulation (6) au rotor (20) de l'engrenage de l'amortisseur rotatif (2),
**caractérisé en ce que**
le stator (22) est entouré par un élément de boîtier corotatif (24), relié à l'engrenage, que
un boîtier d'amortisseur (14) présente un appendice de boîtier (36) relié solidaire en rotation au boîtier d'amortisseur (14), entourant l'élément de boîtier corotatif (24), et que
un frein de force centrifuge est agencé entre l'élément de boîtier corotatif (24) et l'appendice de boîtier (36).

2. Amortisseur rotatif (2) selon la revendication 1, **caractérisé en ce que** l'élément de boîtier corotatif (24) est logé rotatif par le palier pivotant (26) au niveau du stator (22).

3. Amortisseur rotatif (2) selon la revendication 1, **caractérisé en ce que** le frein de force centrifuge comprend un ressort de traction (28) relié à l'élément de boîtier corotatif (24) et un élément de friction sollicité par le ressort de traction (28) avec une masse (m), qui est déplacé suite à la force centrifuge en direction d'une surface de friction fixée au boîtier au niveau de l'appendice de boîtier (36).

4. Amortisseur rotatif (2) selon la revendication 1, **caractérisé en ce que** le ressort de traction (28) et la masse de l'élément de friction sont dimensionnés de sorte que le frein de force centrifuge devient efficace lorsqu'une force d'amortissement demandée est dépassée le moment de basculement mis à disposition par le générateur (4).

5. Amortisseur rotatif (2) selon la revendication 1, **caractérisé en ce que** l'appendice de boîtier (36) forme la surface de friction du frein de force centrifuge.

6. Amortisseur rotatif (2) selon la revendication 1, **caractérisé en ce que** l'élément de friction (30) est fixé au niveau de l'élément de boîtier corotatif (24) par le biais d'un élément de support (32) et d'une charnière (34).
